# EUROPEAN PATENT APPLICATION

(11) **EP 0 704 241 A1**
(43) Date of publication of application: **03.04.1996**
(21) Application number: 95114114.2
(22) Date of filing: 08.09.1995
(51) Int. Cl.: B01J 35/04, B01J 23/40, B01J 37/34, B01J 37/02, B01D 53/94

(54) **Catalyst structure comprizing a cellular substrate and a layer of catalytically active material**

(30) Priority: 29.09.1994 US 315257
(71) Applicant: CORNING INCORPORATED, Corning, N.Y. 14831 (US)
(72) Inventor: Addiego, William Peter, Corning Incorporated, Corning, NY 14831 (US); Brown, Jacqueline Leslie, Corning Incorporated, Corning, NY 14831 (US); Bagley, Rodney Delano, Corning Incorporated, Corning, NY 14831 (US)
(74) Representative: Reinhard - Skuhra - Weise & Partner

(57) **Abstract**

The invention relates to a catalytic cellular structure such as a honeycomb monolith having an active catalyst formed on the cell walls on the inlet and outlet end faces of the monolith, in the form of a thin film of catalytically active metal integrally bonded to the surface of the structure. The resulting structure is useful as a catalytic converter, and is particularly stable under extreme thermal conditions. For automotive exhaust applications, the catalytic structure can be positioned in the manifold position where maximum use can be made of the heat from the engine exhaust to quickly bring the converter to light-off conditions during cold-start.

## Description

The invention relates to a cellular or honeycomb structure useful as a catalytic converter, particularly for internal combustion engines.

Catalytic converters have been successful in reducing the emission of harmful compounds into the atmosphere, particularly, automotive emissions. However, as pollution standards become more stringent, there continues to be a need for better and improved converters. The Federal Test Procedure (FTP) is an emission certification test used on light-duty vehicles. Cold-start under FTP standards is the starting of an engine after a period of 12 to 36 hours of non-operation in a temperature environment of 20-30 _{°}C. For most cold-starts, there is a time span of one to two minutes between the time the emissions begin, that is, cold start, to the time the substrate heats up sufficiently for catalyst "light-off" to occur. It is estimated that about 50% of the pollutants escaping into the atmosphere from a vehicle equipped with a catalytic converter is generated in these first two minutes following cold start-up. Light-off time is the time it takes to achieve a 50 percent conversion efficiency. The temperature at which about 50% of the pollutants have been converted to harmless gases is the light-off temperature. For most emission control systems, the light-off temperatures of the major exhaust gas pollutants are generally in the range of about 250 to 350 _{°}C. By reducing the light-off time, the amount of pollutants escaping into the atmosphere can be reduced.

It has been suggested to heat the entire catalytic converter or to heat the inlet gas stream in order to bring the substrate to its light-off temperature faster. In one suggested system a heater is disposed in the exhaust gas passage ahead of the catalytic converter, first heating up the exhaust gas which then heats up the catalytic substrate, but a substantial amount of electric power is required to raise the substrate to a temperature high enough to heat all of the incoming exhaust gases. The needed energy could be reduced by positioning the catalytic converter so close to the engine that hot exhaust gases leaving the engine can be brought in immediate contact with the converter, thereby quickly heating the converter to its light-off temperature. However, conventional catalyst systems, particularly those used for automotive emission control generally consist of catalytically active metals that are dispersed on a high surface area, porous oxide coating (or washcoat), carried on a cellular substrate, typically of alumina and other oxides such as ceria, and often noble metal catalysts. There is a danger of thermal shock because the washcoat generally has a much higher expansion than ceramic substrates such as cordierite, the most frequencly used substrate material. Consequently, washcoated catalyst structures should not be placed close to the engine as this increases the potential for thermal shock.

Furthermore, because of the high temperatures at which the catalytic converter operates, the highly dispersed catalyst metal sinters over time causing the metal to migrate or diffuse into the washcoat or to become alloyed with the washcoat components to form catalytically inactive components. These problems are increased when the catalyst structure is placed close to the hot exhaust source, for example, the engine manifold, where both temperature ramping rate and the operating temperatures are high.

Other problems associated with washcoated catalyst structures in general include the potential for higher back pressure which can result where the washcoat reduces the open cell diameter of the substrate thereby restricting gas flow. Further, excessive washcoat can result in the infiltration of the catalyst metal deep into the washcoat making such catalyst inaccessible to the exhaust gases. Also, due to variabilities in the washcoat process, excessive amounts of the noble metal components are sometimes required in order to meet the minimum catalyst loading specifications. Finally, in general, poorly controlled washcoating process can result in higher conversion temperatures, lower steady state conversion yields, and poor durability during aging.

There continues to be a need for improved catalyst structures that can overcome many of the above-listed problems, and in particular, for automotive catalytic converters which can be placed close to the engine manifold; one that can withstand the high engine temperature and achieve light-off in a time period sufficient to meet or exceed the increasingly short time periods required by new FTP standards.

Accordingly, it is the object of the present invention to provide a non-washcoated cellular catalyst structure for quick light-off, capable of withstanding hot exhaust gas temperatures.

### SUMMARY OF THE INVENTION

Briefly, the invention relates to a catalytic cellular structure in which the active catalyst is in the form of a thin film of catalytic material integrally bonded to the surface of a substrate. The invention discloses a self-heated catalytic converter suitable for various applications including automotive emissions control, diesel fumes, wood stove, industrial stacks emission and any application in which the exhaust gas stream temperature at start-up is too low to initiate fast light-off. By "self-heated" we mean that the catalytic converter is able to achieve quick light-off without the use of a separate heater and without the use of additional energy. That is, the structure relies on the heat generated by the engine to attain quick light-off.

In one aspect, catalytic converter devices having the catalyst structure of the invention can be used either as a main catalyst, a burn-off catalyst, or alternatively, a light-off catalyst or pre-heater to be used in conjunction with a downstream converter and/or hydrocarbon adsorber.

As used in this specification, cellular or honeycomb structure or body includes any monolithic structure having inlet and outlet end faces, and having a matrix of walls defining a plurality of cells or passageways. Preferably, the cellular structure is in the form of a honeycomb body having open-ended cells or passageways extending longitudinally and mutually parallel therethrough between the inlet and outlet end faces of the body. The terms "inlet end portion" and "outlet end portion" as used throughout this specification (including the claims), refer to the regions of the cellular structure adjacent to, close to, or in the region of, the inlet and outlet end faces respectively.

### BRIEF DESCRIPTION OF THE DRAWINGS

FIG. 1 is a graph showing the light-off temperature of a catalyst structure of the invention consisting of a 1200 cells per square inch substrate having a thin film of a platinum/rhodium alloy (90/10) formed on the inlet end of the substrate;
FIG. 2 is a similar graph of a catalyst structure of the invention using a substrate having 400 cells per square inch and having a thin film of the platinum/rhodium alloy formed on its inlet end;
FIG. 3 is a graph comparing the effect of severe sequential air-aging on NOx conversion efficiency for a commercial grade catalyst (dotted line) and the catalyst of the invention (solid line) having a thin film of a platinum-rhodium alloy sputtered on a ceramic substrate;
FIG. 4 is a similar graph to FIG. 3, comparing the effect of aging on carbon monoxide conversion;
FIG. 5 is a similar graph to FIG. 3, comparing the effect of aging on hydrocarbon conversion;
FIG. 6 is a graph comparing the effects of severe sequential air-aging on NOx light-off temperatures for a commercial grade catalyst (dotted line) and the catalyst of the invention (solid line) having a thin film of a platinum-rhodium alloy sputtered on a ceramic substrate;
FIG. 7 is a graph similar to FIG. 6, comparing the effects of severe aging on carbon monoxide light-off temperature; and
FIG. 8 is a graph similar to FIG. 7, comparing the effects of severe aging on hydrocarbon light-off temperature.

### DETAILED DESCRIPTION OF THE INVENTION

We have found that excellent conversion of automotive exhaust components in particular such as carbon monoxide, hydrocarbons and oxides of nitrogen, can be obtained by use of a cellular substrate having formed thereon, a thin film of noble metal catalyst such as platinum, rhodium, palladium or a mixture of these. In particular, we have found that significantly better results can be obtained by use of substrates having high cell density as measured by the number of cells in a predetermined area of the substrate. Most automotive catalytic converters are found in the 400 to 600 cells per square inch (cpsi) range. Lower light-off temperatures (and consequently, quicker light-off) are obtained using higher cell density substrates. Light-off values describe the catalyst conditions when 50% conversion rate is attained for a given exhaust gas component. The sooner light-off conditions are attained, the more desirable and the more efficient is the catalyst for the given component.

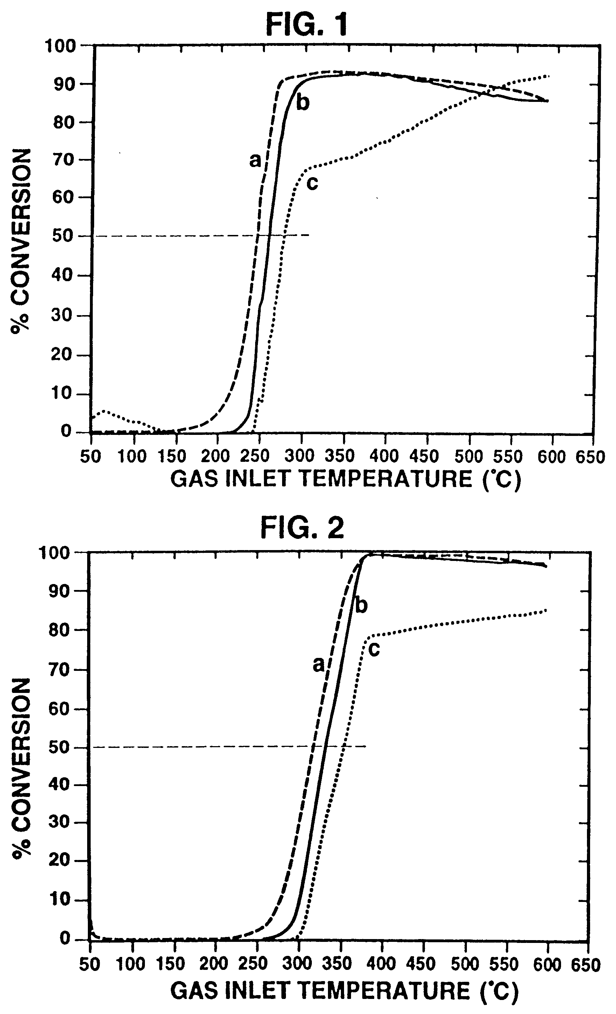

FIGS. 1 and 2 are graphs comparing the light-off conditions of a 1200 and 400 cpsi substrates respectively, having a thin film of a platinum/rhodium alloy (90/10) sputtered onto the cell walls on the inlet end portion. In both FIGS. 1 and 2, the percent conversion rates of carbon monoxide (CO), hydrocarbons (HC), and oxides of nitrogen (NOx) are indicated by lines a, b and c respectively. As shown, better light-off values are obtained using the higher cell density substrate, FIG. 1. For example, the light-off temperature for CO using the higher density substrate (1200 cpsi, FIG. 1), is about 230 °C. Under the same operating conditions, the light-off temperature for CO using the 400 cpsi substrate increased to about 300 °C (FIG.2). The same trend was observed for both hydrocarbons and NOx. Without intending to be bound by theory, it is believed that the the high cell density provides a greater (or denser) kinetically active cross-section. It should be noted here that even though the light-off temperatures increased in the 400 cpsi catalyst structure of the invention, these light-off temperatures are still well within the acceptable range of light-off temperatures for these exhaust components.

We have found that by integrally bonding kinetically active metals and/or their precursors onto a temperature resistant substrate such as ceramics, glass-ceramic or metal materials, the catalyst structure can be disposed in or near the exhaust manifold to take full advantage of the hot engine exhaust gases and thereby achieve quick light-off during cold start. The proximity of the catalyst structure to the engine will depend on the engine design and space availability. In a particularly useful embodiment, the active metal is bonded onto the substrate surface by sputtering.

The active metal can be applied to the substrate by any known method such as sputtering, spraying, evaporation, dipping and other known methods.

The resulting sputtered metal/oxide structure can provide the dual function of a catalyst and a heater. The sputtered structure can also function as a pre-converter or as a light-off catalyst. Because the catalyst is applied in the form of a thin metal layer, the problems encountered in sintering washcoated structures such as diffusion and migration, are eliminated. As contemplated by the invention, a device having one or more substrates each having a layer of catalyst metal formed on one or more of the end faces can be close coupled with the engine exhaust manifold to function as a pre-heater or a light-off catalyst. In this embodiment, the device may be used in combination with a burn-off catalyst or a main catalyst which can be disposed downstream from the device.

In one experiment, sputtered Pt-Rh alloy (10:1) catalyst film was applied in an amount of 120 g/ft³ on an underlayer of ceria on a 895 cpsi cordierite substrate. For comparison, the performance of the above sample of the invention was tested against a commercial washcoated honeycomb catalyst formed on a 400 cpsi substrate having a washcoat loading of Pt-Rh alloy (5:1), in an amount of 45-50 g/ft³, and an estimated fresh dispersion of about 75% and about 10% after aging. The estimate of the film surface area of the sputtered catalyst of the invention (therefore, dispersion), is based on the substrate geometric surface area and the density of bulk Pt-Rh alloy; while the estimate of the dispersion (or exposure) for commercial catalyst are typical of catalyst metals that are supported on high surface area oxides (i.e., washcoats). It should be noted that even though the sputtered catalyst of the invention has a higher catalyst loading, we believe that the exposed surface of the metal of the invention is significantly less than the dispersion (surface exposure) of the commercial washcoated sample.

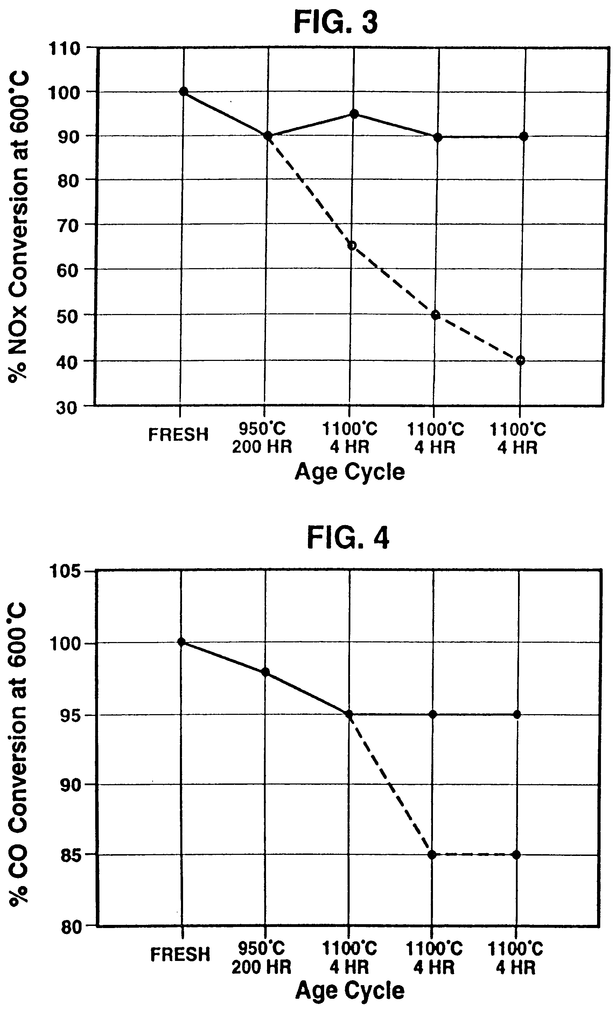

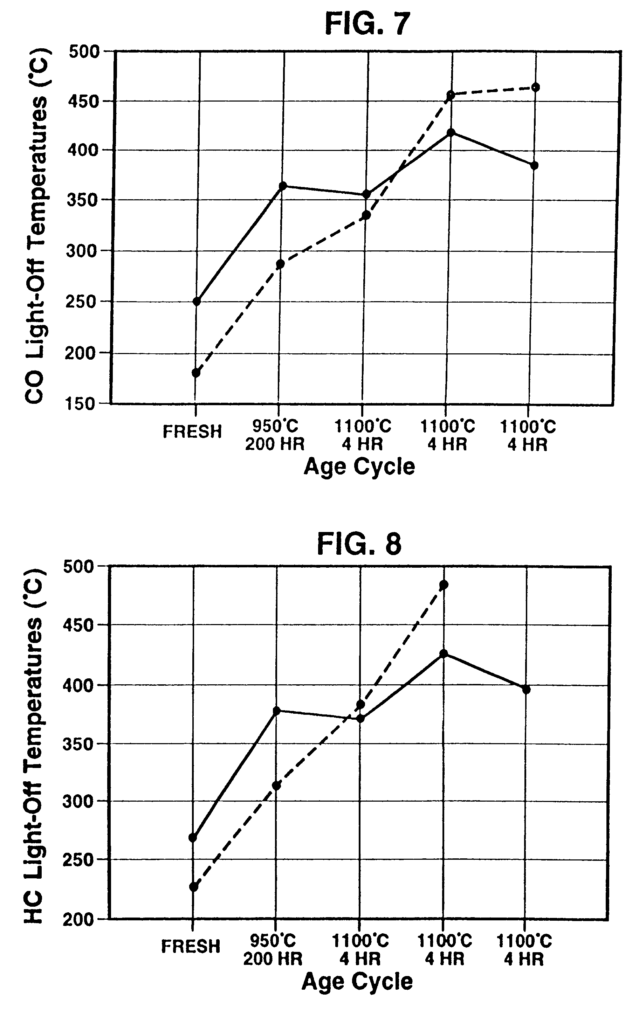

The results are illustrated in FIGS. 3 to 8. The light-off and conversion results of the sputtered metal structure of the invention are indicated by the solid lines while the comparable results for the commercial washcoated catalyst are indicated by the dotted lines. At the outset, both the fresh commercial catalyst and the sputtered samples showed approximately the same net percent conversion of nitrogen oxides, carbon monoxide and hydrocarbons when tested under identical conditions. See FIGS. 3-5. The samples were then sequentially aged by subjecting the samples through four thermal cycles as follows: Cycle 1: 950 °C for 200 hours; Cycle 2: 1100 °C for 4 hours; Cycle 3: 1100 °C for 4 hours; and Cycle 4: 1100 °C for 4 hours.

After the first cycle, both samples provided about the same conversion rates for all gas components. With further aging, the sputtered catalyst yielded significantly better NOx and CO conversion than the commercial washcoated catalyst. With respect to hydrocarbons, both catalysts appeared to have comparable conversion rates. As shown by the graphs, the sputtered structure exhibited high stability even after extreme aging. This is a key aspect of the catalyst structure of the invention.

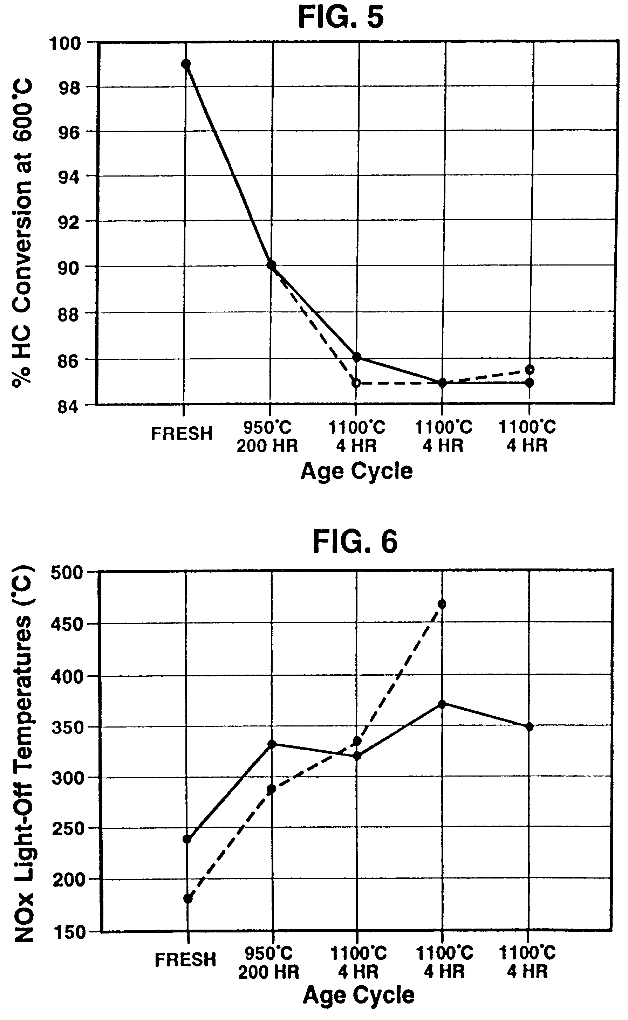

FIGS. 6-8 are graphs comparing the light-off values of sputtered catalyst of the invention (solid lines), and commercial washcoated catalysts (dotted lines) in both the fresh and aged states. As shown, after about the second aging cycle the light-off values of the sputtered and commercial samples are comparable even though the sputtered sample has an estimated dispersion of less than 3% at this stage. With further aging, the sputtered catalyst showed consistently better light-off performance than the commercial catalyst. After the third cycle, the sputtered sample showed significantly lower light-off temperature than the commercial catalyst. In fact, after the fourth aging cycle, the commercial catalyst failed to light off for NOx conversion (FIG.6). That is, the commercial catalyst failed to attain 50% conversion of NOx, attaining only a 40% conversion. Similarly, the sputtered catalyst provided a light-off temperature which was about 17% lower than the light-off temperature of the commercial catalyst for CO; and about 16% lower than that of the commercial catalyst for hydrocarbons. The results indicate that the dispersed catalyst of the washcoated sample degrades more rapidly than the sputtered catalyst. Without intending to be bound by theory, we believe that with aging, the washcoated catalyst begins to lose some of its catalytic activity due to a reduction in the available catalytically active sites caused by the fusing and sintering of the noble metal particulates with aging, and perhaps other aging phenomena associated with dispersed catalysts in washcoats.

Useful catalytically active materials for the invention include any kinetically active material such as metals, preferably noble metals, metal alloys, metal oxides, rare earth oxides, alkaline earth oxides and combinations of these, which can be applied to form a bonded layer over a suitable substrate. Some examples of particularly useful catalytically active materials include platinum, rhodium, palladium, their precursors, and a combination of these, and oxides, sulfides and phosphates of cerium, aluminum, tantalum, silicon, titanium, zirconium, yttrium, niobium and combinations of these.

The catalytically active material can be applied to the substrate in one or several layers. The total thickness of the layer(s) is limited by the cell size as care should be taken to ensure that the cells remain open and are not unduly restricted by the formed layer since this could lead to excessive back-pressure during use. Preferably, the thickness of the catalytically active material is no greater than about 10 microns to avoid spalling. The minimum thickness can vary depending on the smoothness of the substrate as well as the operating conditions such as the proximity of the catalyst to the engine, exhaust gas temperature and other operating variables. For example, for applications requiring low operating temperatures, the thickness of the metal catalyst can be as low as about 100 Angstroms (0.01 microns. For most automotive applications the metal layer thickness is preferably in the range of 300 Angstroms (0.03 microns) to about 5 microns.

Certain catalysis promoting materials may also be added to the catalytically active material or applied to the substrate as an intermediate layer prior to application of the catalytically active material. Alternatively, the catalysis promoting material (promoter) can be applied over the catalyst as an overlay provided that the promoter overlay is sufficiently porous. Where the promoter is applied as an overlay, the promoter is preferably porous or permeable to the exhaust gases. If the promoter is not porous or permeable, then the promoter overlay can be applied in discrete or isolated segments over the catalyst so that the segments of non-overlayed catalyst can be accessible to the exhaust gases. Examples of useful catalysis promoting materials which may be used in the invention include oxides, sulfides and phosphates of cerium, aluminum, tantalum, silicon, titanium, zirconium, yttrium, niobium and combinations of these.

The substrate of the invention can be ceramics, glass, glass-ceramics, metal, metal alloy, fused silica, intermetallic material, non-oxide inorganics, composites, or mixtures of these. Preferably, the substrate is in the form of a honeycomb or cellular monolithic structure. The catalyst metal can be applied on a porous or non-porous substrate. However, where the substrate is too porous, an intermediate layer having a lower porosity may be formed over the substrate prior to applying the catalyst layer. The intermediate layer is preferably composed of catalysis promoting materials such as described above to enhance the catalytic activity of the structure.

The catalytically active material is applied to cover only the outside surface of the substrate structure so that most of the applied material is accessible to the exhaust components to be converted. This is an important benefit making the catalyst structure of the invention significantly more effective than conventional washcoated catalysts. In a washcoated catalyst structure, a significant amount of the noble metal catalyst are buried in the washcoat and as such are not accessible to the exhaust components. This, and other aspects of the invention are described below with reference to some of its many advantages.

The catalyst of the invention can be applied in a variety of configurations. For example, it can be applied in alternate layers (e.g., Pt-Pd-Rh), multi-layers, that is, different metals on different segments of the substrate surface, and co-deposition (i.e., one or more layers of a mixture of different metals), using the same or different metal species that serve as catalyst or promoters for the different exhaust gas components. That is, different metal catalysts can be formed over other catalysts and/or catalysis promoting materials, or homogeneously mixed as a composite layer as thin as angstroms to minimize the amount of catalyst required.

It is also contemplated by the present invention that the catalyst metal or metal alloy can be applied to the substrate prior to forming. For example, the metal catalyst can be applied to a crimped or corrugated metal or ceramic sheet, an embossed metal or ceramic sheet, or a metal or ceramic foil, which can then be wrapped, rolled or stacked to form a honeycomb-like monolith or cellular structure. In this embodiment, the metal can be formed by evaporation and other known methods for applying metal to a flat sheet.

Because the catalytically active layer of the invention is thin, we have found the present catalyst structure to be significantly more stable at high temperatures than the fine dispersed metal particles found in washcoated catalysts which tend to coalesce, migrate and diffuse into the washcoat or react with contaminants to form non-catalytically active components. Also, unlike washcoated structures, the thin layers on the present catalyst do not significantly restrict fluid flow through the cells or passageways of the catalyst structure. As a result, cellular bodies having very high cell densities and therefore very thin walls, for example, 1000 cpsi (155 cells per square centimeters (cpscm)) or greater and cell walls in the region of 3 to 8 mils, preferably, 6 mils (.152 mm) or less, can be easily coated with metal catalysts using the method of the invention. Such high cell density substrates are difficult to catalyze by the washcoat method as there is a tendency to clog the very small cells of such structures.

As stated earlier, multiple catalytically active materials can be applied to the substrate to form complex metal alloys. In addition, catalysis promoting materials such as oxides and other compounds can be applied to the structure either before, concurrently, or after the catalytically active layer is formed. Useful catalysis promoting materials include oxides, sulfides and phosphates of cerium, aluminum, tantalum, silicon, titanium, zirconium, yttrium, niobium and combinations of these to name a few. Rare earth oxides and alkaline earth oxides may also be combined with the above to form the catalysis promoting layer.

Since sputtering targets can be made of the exact alloy desired, catalytically active materials comprising very complex alloys can be applied to the substrate. Application of complex alloys by the washcoating method would require successive coatings and firing steps.

Although sputtering is a preferred method for applying the catalyst material to the substrate, other methods which provide similar high mechanical adhesion of metals, oxides, nitrides and the like, to the substrate can be used such as evaporation.

We have found that sputtered metal penetrates into the end of a fine cell-sized body (high cell density) only to about one centimeter or less. To provide for optimum catalytic activity, when sputtering is used to apply the metal, preferably the substrate is divided into slices measuring less than one centimeter, more preferably, about 0.5 centimeters in thickness. The optimum thickness of the slices will depend on the particular application and on the method used to apply the metal layer. For example, where the metal is applied to a formed honeycomb substrate by sputtering, the thickness of the slices will be limited by the depth of penetration of the sputtering gun. For most applications, the depth of penetration of the sputtering gun is in the region of about one centimeter. Therefore, to ensure maximum coverage of the metal catalyst, the slices may be no thicker than one centimeter so that maximum coverage can be obtained by sputtering from both end faces of the slice. However, where it is desired to use the structure as a light-off catalyst only, it may not be necessary to obtain maximum coverage. For instance, the metal may be formed only on the inlet end face of the substrate which is then positioned close coupled with the engine for the purpose of achieving early light-off.

Each slice can then be sputtered from either one or both end faces of the slice. To form an exhaust emissions control device using the catalytic structure of the invention, several coated or sputtered slices can be arranged in a can or housing which can then be positioned at the engine exhaust manifold. The slices can be stacked in abutting contact with each other or alternatively, spacers can be placed between the slices to provide maximum mixing of the gases between the slices. The slices can be of the same or different cell size and geometry. Similarly, the inlet and outlet end faces may be coated with the same or different catalytically active material. Also, each slice can have the same or a different catalyst from an adjacent slice. The number of slices in each converter device will depend on the engine type and size to maximize the effectiveness of the converter.

Slices of the catalytic structure can be arranged in various configurations within a housing or device. For example, the slices can be arranged such that cells of a given slice are in alignment with cells of adjacent slices. In another embodiment, cells of a given slice can be off-center or misaligned with cells of adjacent slices to achieve greater kinetic activity. Alternatively, cells of a first group consisting of two or more successive slices may be in alignment, followed by one or more groups of slices some or all of which latter groups may be in alignment or off-center with each other and/or with the first group.

## Claims

1. A catalyst structure consisting essentially of:
a substrate or support having inlet and outlet end faces, and a matrix of cell walls defining a plurality of cells or passageways extending longitudinally and mutually parallel therethrough between the inlet and outlet end faces; and
a layer of catalytically active material formed on the cell walls on at least one of said end faces such that the layer of catalytically active material is intimately bonded to, and is an integral part of the substrate.

2. The catalyst structure of claim 1, wherein the catalytically active material is selected from the group consisting of metals, metal alloys, metal oxides, rare earth oxides, alkaline earth oxides, and mixtures of these.

3. The catalyst structure of claim 2, wherein the catalytically active material comprises platinum, rhodium, palladium, their precursors, and a combination of these, and oxides, sulfides and phosphates of cerium, aluminum, tantalum, silicon, titanium, zirconium, yttrium, niobium and combinations of these.

4. The catalyst structure of claim 1, wherein the layer of catalytically active material is of a thickness in the range of 0.03 to 5 microns.

5. The catalyst structure of claim 1, further comprising at least one additional layer of catalytically active material.

6. The catalyst structure of claim 1, further comprising at least one layer of catalysis promoting material.

7. The catalyst structure of claim 6, wherein the catalysis promoting material is selected from the group consisting of oxides, sulfides and phosphates of cerium, aluminum, tantalum, silicon, titanium, zirconium, yttrium, niobium and combinations of these.

8. The catalyst structure of claim 1, wherein the substrate is selected from a group of materials consisting of ceramics, metals, metal alloys, glass-ceramics, intermetallic materials, non-oxide inorganic materials, and mixtures of these.

9. The catalyst structure of claim 1, wherein the substrate comprises 50-90 parts by weight of a sintered ceramic matrix material and 10-50 parts per weight of a high surface area catalyst-support material dispersed throughout the matrix wherein
(a) the ceramic matrix material consists of cordierite, mullite, alpha-alumina, lithium aluminosilicate, or mixtures of these; and
(b) the dispersed catalyst-support material has a surface area of at least 40 m²/g and a crystallite size no larger than about 0.5 microns, and the catalyst-support material consists of transition metal sulfide; a mixture of transition metal sulfide; porous oxide selected from the group consisting of alumina, zirconia, spinel, silica, zeolite, titania, and mixtures of these; and combinations of these.

10. The catalyst structure of claim 9, wherein the dispersed catalyst-support material is alumina, spinel, or a mixture of alumina and silica; and wherein the catalyst support further comprises up to 20 percent by weight, based on the weight of the dispersed catalyst-support material, of rare earth oxide.

11. The catalyst structure of claim 1 or 9, wherein the substrate comprises a cellular or honeycomb structure, or a honeycomb monolith.

12. The catalyst structure of claim 11, wherein the honeycomb monolith comprises at least 400 cells/in², or the honeycomb monolith comprises cell walls having a thickness in the range of 3 to 8 mils, and/or the honeycomb monolith is a thin slice having a thickness in the range of 0.2 to 1 cm.

13. Use of the catalyst structure of any one of the preceding claims in a device for converting pollutants in an exhaust gas stream into innocuous components.

14. The use of claim 13, wherein the catalyst structure comprises thin slices arranged in series within a housing, in abutting contact with each other, or such that each catalyst structure is separated from an adjacent structure by a spacer to enhance mixing of the gas stream between the slices, or such that the cells of each slice of the catalyst structure are off-center with the cells of an adjacent slice of the catalyst structure to create a staggered cell structure.
